# EUROPEAN PATENT SPECIFICATION

(11) **EP 1 878 170 B1**
(45) Date of publication and mention of the grant of the patent: **04.03.2015**
(21) Application number: 05756333.0
(22) Date of filing: 01.07.2005
(51) Int. Cl.: H04L 12/54, H04L 12/24, H04Q 11/04

(54) **METHOD AND ARRANGEMENT IN A DATA NETWORK FOR BANDWIDTH MANAGEMENT**
VERFAHREN UND ANORDNUNG IN EINEM DATENNETZWERK ZUR BANDBREITENVERWALTUNG
PROCEDE ET MONTAGE DANS UN RESEAU DE DONNEES POUR LA GESTION DE LA LARGEUR DE BANDE

(30) Priority: 03.05.2005 US 676944 P
(43) Date of publication of application: 16.01.2008
(73) Proprietor: NetSocket, Inc., Plano, TX 75025 (US)
(72) Inventor: BODIN, Ulf, S-973 32 Luleå (SE); KARLSSON, Johan, S-977 52 Luleå (SE)
(74) Representative: Epping - Hermann - Fischer
(86) International application number: PCT/SE2005/001059
(87) International publication number: WO 2006/118500

(56) References cited:
- US-A- 5 649 110
- US-A- 6 085 241
- US-A1- 2002 059 432
- US-A1- 2005 083 842
- US-B1- 6 483 839
- US-B1- 6 687 228
- HESS R ET AL: "RSVP Extensions for Policy Control" IETF DRAFT DRAFT-IETF-RAP-NEW-RSVP-EXT-00.TXT, June 2001 (2001-06), XP015026250

## Description

### Field of the invention

The present invention relates to arrangements and a method for improving reservation of bulk resources in a data network. In particular, the present invention relates to arrangements and a method for controlling the signalling rate of messages associated with the reservation of bulk resources.

### Background

A current networking trend is to provide "Internet Protocol (IP) all the way" to wired and wireless units in an IP based data network. Objectives include simplifying the infrastructure, supporting a wide range of applications, and meeting diverse user demands on the communication service. Satisfying these objectives requires scalable and reliable solutions are needed providing service differentiation and dynamic bandwidth management within IP networks.

IP was from the beginning designed to be a general communication solution. IP technology is now recognised to be cheap and appropriate for supporting both traditional data applications and delay-sensitive real-time data applications. To provide expected service for real-time applications, logically (and physically) separate IP networks are used.

Each IP network serves only a subset of sensitive applications (e.g. IP telephony) with quite predictable bandwidth requirements. By limiting the range of applications, the total bandwidth demand can be predicted. This allows for the network to be dimensioned using the same traffic models as are used for vertically optimised networks. The benefit of cheap IP equipment is obtained without requiring support for dynamic service provisioning in the IP technology.

Network operators now aim at cutting the overhead cost of maintaining several parallel networks. One current trend is to simplify the infrastructure by running all kinds of applications, with various network service demands, in the same logical IP network (i.e. next generation multi-service networks). This means that the application heterogeneity in IP networks is increasing.

In the research and standardisation bodies the development of Quality of Service (QoS) support has progressed from providing signalled solutions for the Internet (somewhat resembling the solutions used in vertical networks) to now recognising that more stateless solutions are favourable.

The scalability problems of solutions using per-flow QoS management in routers have resulted in the differentiated services architecture defined by the IETF. The objective with this architecture is to provide scalable QoS support without requiring per-flow state in routers. The basic idea is that IP packet headers include a small label (known as the DiffServ field) that identifies the treatment (per-hop behaviour) that packets should be given by the routers. Consequently, core routers are configured with a few forwarding classes and the labels are used to map packets into these classes. The architecture relies on packet markers and policing functions at the boundaries of the network to ensure that the intended services are provided.

One advantage of differentiated services is that the model preserves the favourable properties that made the Internet successful; it supports scalable and stateless forwarding over interconnected physical networks of various kinds. The standard model is, however, limited to differentiated forwarding in routers and therefore the challenge lies in providing predictable services to end users.

Qualitative services (relatively better than best-effort services, but depending on where the traffic is sent and on the load incurred by others at the time) can be provided by relying only on DiffServ support in routers and bandwidth management mechanisms for semi-static admission control and service provisioning.

To provide quantitative (minimum expectation) service, resources must be dynamically administrated by bandwidth management mechanisms and involve dynamic admission control to make sure that there are sufficient resources in the network to provide the services committed.

The entity performing dynamic admission control is in this specification called a bandwidth manager (BM). A BM entity is adapted to keep track of the available network resources and performs admission control on incoming resource reservation requests from clients. Clients to a bandwidth manager entity are typically call servers emulating the traditional telephony service and various broadband application frameworks providing services such as video on demand, video telephony, and gaming. These clients are commonly referred to as application frameworks (AFs) and the term AF is also used in this specification to denote the clients to the BM.

A reservation request from an application framework to a BM typically include the amount of bandwidth needed, a description of the forwarding quality expected, and endpoint identifiers for the target data stream in the form of IP addresses. Such request may also include additional arguments such as start and stop times for the reservation.

To perform admission control the BM entity stores a history of previously admitted resource reservations. The BM entity takes decisions to admit new resource requests based on the total amount of available resources, the amount currently reserved by previously reservations and the amount of resources requested in the new resource request.

The BM entity should provide accurate resource control both in access domains and in core domains. Accurate resource control requires the BM entity to control resources at individual contention points in the network. Contention points in a network are those points at which multiple data streams share forwarding capacity. Examples include outgoing network interfaces, tunnel heads in MPLS networks, and VC/CP entrances in ATM networks.

A similar system is disclosed in US 2005/083842 A1.

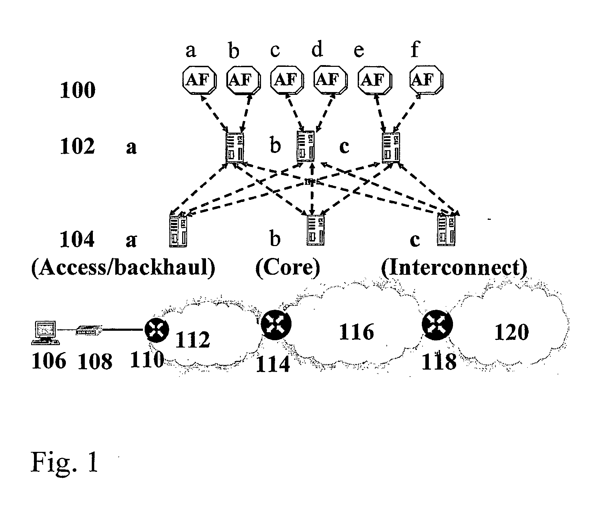

When deployed in large data networks that may include multiple network domains the BM system needs to be distributed for performance, scalability and reliability reasons. This means that BM instances may be distributed on a set of hardware platforms. These instances must communicate to serve AFs with resource reservation services in the different network domains covered by the BM system. Examples are described on how a set of BM instances can be arranged in distributed BM systems. **Figure 1** shows a BM deployment comprising a plurality of AFs 100a-f. The AF 100 a,b are connected to the top level BM entity 102 a, the AFs 100 c,d are connected to the top level 102b and the AFs 100 e,f are connected to the top level 102c. The top-level BM entities are further connected to the sub-network BM entities 104a-c. The example shown in **figure 1** cover bandwidth management in access 106,108,110, backhaul 112, core 116 and interconnect 120 domains. The access network comprises a Customer Premises Equipment (CPE) and an end-terminal. The backhaul network 112 and the core network 116 are connected via an IP edge 114 in the same way as the core network 116 and the interconnect network 120 that are connected via the IP edge denoted 118.

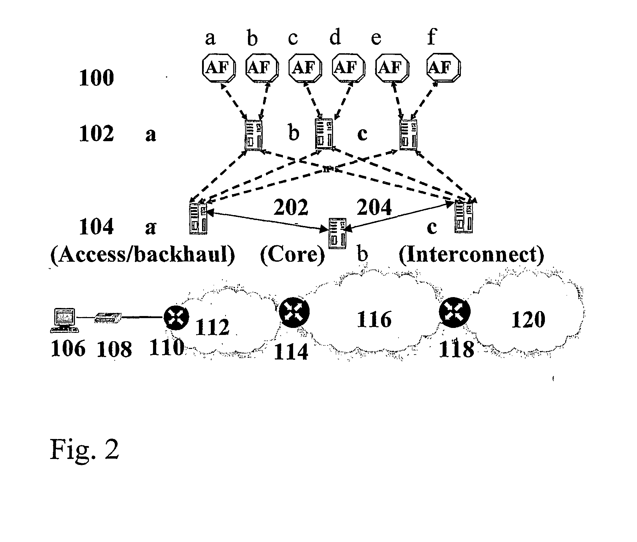

BM (instances) can be scaled in a hierarchical manner as shown in Figure 1, whereby BM entities at each level in the hierarchy reserve resources from lower level BM entities using interface IF-5. Lower level BM entities are responsible for different sub-domains of the network. Such BM entities are referred to as sub-network BM entities denoted S-BM entities. Top-level BM entities are responsible for identifying the sub-network that the session crosses and hence the sub-network BM entities that must be queried for resources. **Figure 2** illustrates a BM deployment as in **figure 1** with the difference that BM entities also may request resources from other BM entities in adjacent peer domains as indicated by the arrows 202 and 204.

In a distributed BM system mechanisms are provided for automatically finding the right BM entities across the layers in the hierarchy and between peers. Thereby an AF does not need to understand the underlying network topology. Finding the appropriate BM entity is achieved by using "source seeking" BM entities. Such BM entities take requests from initiating BM entities and forward them to the BM entity being responsible for performing the reservation.

For the hierarchical model multiple top-level BM entities interact with AFs. Each AF may have a designated top-level BM entity which provides a high level routing and distribution function, identifying the sub-network hops that the data stream must traverse. Top-level BM entities then pass requests to sub-network BM entities which are responsible for reserving resources in individual networks.

Because of the topology model and the routing function of the top-level BM, all hops of the reservation, originating access, core, terminating access can be derived from the top-level BM. In any architecture there can be multiple top-level BMs since no single top-level BM needs to understand the state of the reservations of the others.

Below the top-level BM multiple sub-network bandwidth managers are provided which map the reservation requests to the underlying network resources. These BMs take reservation requests from multiple top-level BMs and perform Call Admission Control (CAC) based on the occupancy of the network resources.

The hierarchically distributed BM architecture scales in two dimensions:
Scaling of reservation request load is obtained by deploying multiple top-level BMs. Bandwidth for individual sessions/calls are requested from the top-level BMs, which share aggregate resources in their domain by interacting with lower level BMs for requesting (pre-allocating) bandwidth aggregates.
Scaling to arbitrary large topologies is obtained by deploying several BM entities at the bottom layer responsible for different topological sub-domains inside the domain.
BM entities may be configured to allocate (aggregate) resources with BM entities in adjacent (peering) sub-domains an additional dimension of scale is achieved. By combining the hierarchical model with peering as shown in **Figure 2****,** each top-level BM does not have to interact with each BM of the sub-domains. This effectively results in adding more levels to the hierarchy.

In the peering model the correct "source" BM for a session must be identified as it is responsible for initiating any requests to peer BM. In order to hide the network topology of the bandwidth management layer to the AF layer, the AF does not need to know where the source BM for each reservation is specifically located. The AF only needs to initiate a request to any BM and the request will be transferred to the source BM via a source seeking BM process, so that a normal process of the request for resources can be started.

### Preserving resources in bulk

A reservation for bulk resources made by a given BM entity is an amount of resource allocated for an aggregate of reservations maintained by the BM entity. Such a bulk reservation can be made by a BM entity in advance to prepare for future reservation request arriving, or immediately as reservations are requested in the BM entity. E.g. say that 10 units of bandwidth is reserved for a given network resource and that a request for one additional unit arrives to a BM entity for this resource. The BM entity may then attempt to update its current bulk reservation of 10 units of bandwidth with the needed additional one unit, or attempt to update the bulk reservation with more then one additional unit to prepare for future requests that may arrive.

Hence, a bulk reservation is a reservation that supports one or more reservations or application data flows (aggregates) and may be done in advance but does not need to.

To allocate resources in bulk is further explained by the following. A single reservation request issued by an AF may result in that multiple resources need to be evaluated in the admission control process. For example, say that the path of such request span two access domains and one core domain. The sub-paths through an access domain involve two independent network interfaces at which traffic is contended. The path through the core network involves three such contention points.

Seven resources need to be evaluated for the path described in the previous paragraph. Without bulk allocation, the request for resources at this path will result in seven requests to lower-level BMs. This happens for every such request when all contention points are represented in the top-level BM.

With bulk allocation of resources the top-level BM can allocate more resources in each request from lower-level BMs than needed to grant the original reservation request from the AF. Thereby, an AF request will result in fewer requests between bandwidth BMs. For example, on average, 1000 AF requests could with bulk allocation result in 100 requests between BMs although each AF request may involve multiple independent resources.

In the example described in the previous section, top-level BMs need to communicate directly or indirectly with other BM entities to allocate aggregate bulk resources that can be offered to AFs. Bulk resources may also need to be allocated between the BM entities arranged in a hierarchy as shown in **Figure 1** or between peering BM entities as shown in **Figure 2****.** Naturally, the BMs need also to return bulk resources that are not needed in the near future. Note that the chain of BM entities involved in allocating bulk resources can include two or more BM entities arranged in hierarchy or as peers.

Bulk resources can be allocated between BM entities for individual contention points, for individual paths through a network domain, or for network domains. Contentions points, paths, and networks can all be represented as objects for which resources can be allocated. Such objects are referred to as resource objects in this specification.

The concept of allocating aggregate resources in bulk includes (a) storing knowledge of individual contention points, individual paths through a network domain, or network domains in top-level BMs, intermediate BMs, and bottom-level BMs. The knowledge of each such network resource can be represented in resource objects or equivalently in any other container for storing knowledge of network resources.

The knowledge of network resources can be maintained by a top-level BM for potentially all network domains at the path of AF reservation requests while intermediate BMs may maintain knowledge of network domains for parts of AF reservation requests. Bottom-level BMs typically maintain knowledge only of the network domain for which they are directly responsible.

Using the knowledge of individual contention points, paths, or networks the bulk concept further includes allocating and returning aggregate resources in bulk from other BMs in a BM system.

By allocating resources in bulk for aggregates of reservations, top-level BMs can immediately grant reservation requests made by application frameworks. This is attractive since it allows the system to offer short response times for such requests.

In addition to the short response time for reservation requests issued by application frameworks, another important issue when allocating resources in bulk are that the rate of messages needed to allocate bulk resources between BM entities must be controllable in order to be able to prevent overloading of servers and to be able to dimension the network providing connectivity between the nodes on which BMs execute. If the message rate, i.e. the signalling rate, is not limited, failure may occur depending on overloaded servers and on discarded reservation requests due to overfull buffers.

The object of the present invention is to provide arrangements and a method that controls the rate of messages needed to allocate bulk resources between entities.

### Summary of the invention

The object of the present invention is achieved by the arrangement of claim 1 and by the method of claim 7.

Preferred embodiments are defined by the depending claims.

The arrangement according to the present invention is associated with a resource managing capable entity, such as a Bandwidth Manager, adapted to reserve and return network resources requested from a first entity in a data network. The arrangement comprising a first message rate limiter means adapted to limit the rate of reservations request messages to the resource managing capable entity, a second message rate limiter means adapted to limit the rate of resource return messages to the resource managing capable entity, and at least one message rate estimator means adapted to adjust the message rate limiters between the reservation request signalling peak rate and sustained rates defined for the communication between the resource managing capable entity and a further the resource managing capable entity, such as another BM, makes it possible to control the rate of messages needed to allocate bulk resources between entities.

The arrangement according to a preferred embodiment comprises buffering means adapted to queue said reservation request messages and said resource return messages.

The arrangement according to a further embodiment comprises aggregation means adapted to aggregate the reservation requests.

The method according to the present invention comprising the steps of limiting the rate of reservations request messages to a resource managing capable entity, limiting the rate of resource return messages to the resource managing capable entity, and adjusting the message rate between the reservation request signalling peak rate and sustained rates defined for the communication between the resource managing capable entity and a further the resource managing capable entity, such as another BM, makes it possible to control the rate of messages needed to allocate bulk resources between entities.

An advantage with the present invention is that the signalling rate between entities involved in bulk allocation of resources can be bounded, while accounting for specific needs related to such bulk resource allocation including request message aggregation and a controlled relation in request and return signalling rates. The signalling rate between the said entities need to be bounded for reasons of network and server dimensioning.

### Drawings

**Figure 1** Bandwidth manager deployment - hierarchy
**Figure 2** Bandwidth manager deployment - hierarchy with peering
**Figure 3** shows schematically the arrangement according to the present invention.

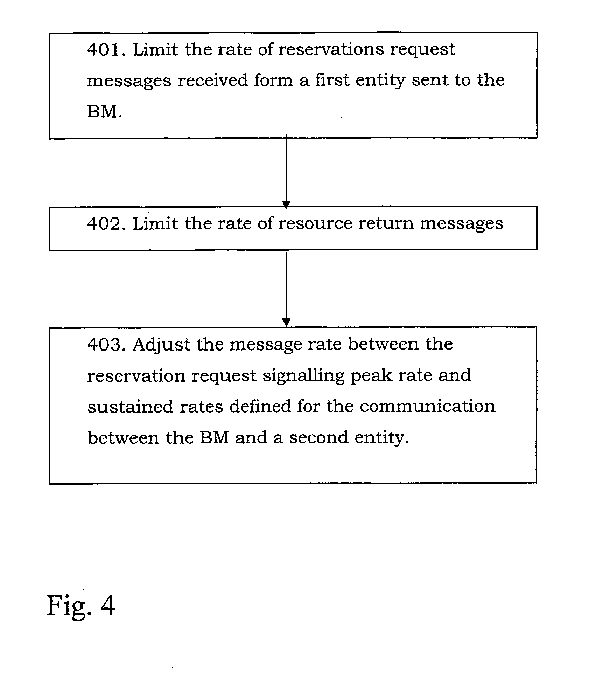

**Figure 4** shows a flow chart illustrating the method according to the present invention.

### Detailed description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

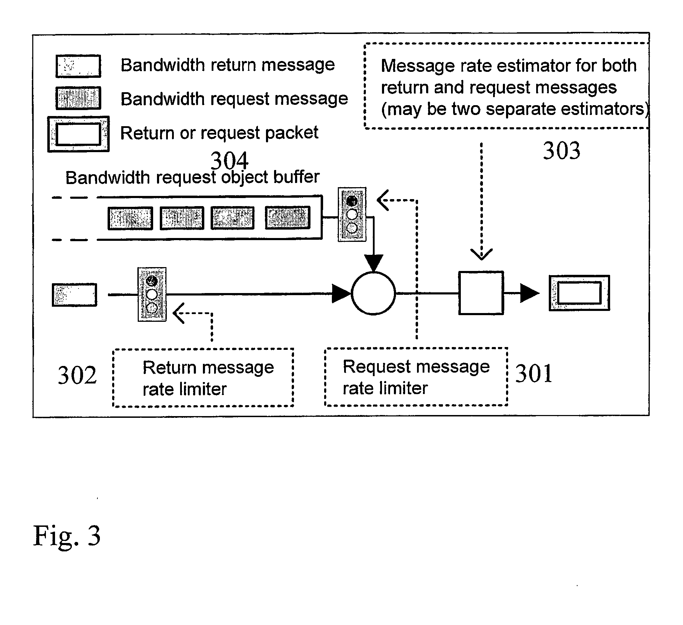

The object of the present invention is achieved by an arrangement shown in **figure 3****.** The arrangement is associated with a resource managing capable entity herein exemplified by a Bandwidth Manager (BM). It should however be noted that the resource managing capable entity may be another entity capable of managing resources. The arrangement comprises a first message rate limiter 301 adapted for limiting the rate of reservation request messages and a second message limiter 302 adapted for limiting the rate of resource return messages. The reservation request message is a message requesting resources sent from a first entity to the BM, wherein the first entity may be a AF or another BM. The resource return message is a message returning resources from the BM to the first entity. Thus, each message rate limiter controls the rate for messages being sent to the resource managing capable entity. The message limiters are adapted to limit the maximal rate at any given point in time.

The arrangement according to the present invention comprises further a first message rate estimator 303 adapted for estimating the rate of reservation requests and a second message rate estimator 303 adapted for estimating the rate of return messages. It should be noted that the first and second message rate estimators may be combined message estimator as shown in **figure 3** or two separate message rate estimators. The message rate estimators are adapted to continuously adjust the message rate limiters between the reservation request signalling peak and sustained rates defined for the communication between the BM and a second entity. The second entity may be yet another BM or another entity capable of managing resources.

The message rate estimator for request and return messages can for example be a token bucket, a moving average, or a table storing the history of transmission intervals. The message rate limiters in combination with the message rate estimator provide means for controlling the rate of messages needed to allocate bulk resources between BMs.

The arrangement according to one embodiment of the present invention comprises further buffering means 304 for queuing reservation requests associated with the first message limiter. The buffer space improves the performance, since requests are generated asynchronous and must generally be stored before they are transmitted. Resource return messages associated with the second message limiter are typically generated on demand when such messages are to be sent. They may however also be generated in advance and stored in a separate return message buffer.

Further, the arrangement according to one embodiment comprises means for aggregating consecutive resource requests for each individual resource object.

To aggregate resources implies to combine multiple resource requests associated with the same resource object into one request message. This happens when a request is made for a particular resource object and a reservation request message for this object is created but not yet transmitted, i.e. it is queued. A new request message will then be aggregated with an existing request message instead of generating a new message.

Reservation requests are aggregated by combining two amounts of resources requested into one single amount. For bandwidth requests this means to simply add the two bandwidths. An advantage of aggregating reservation requests is that it reduces the response time for resource reservation requests.

By configuring the resource request signalling rate considerably higher than the resource return signalling rate, means for providing some degree of fairness in the distribution of scarce resources to its client bandwidth manager instances is provided.

The resources are then returned on a longer time scale than the time scale at which resources are requested. The rate of reservation requests and the amount of bandwidth requested may vary between BMs. BMs with higher demand will issue requests more frequently and ask for more bandwidth over a given period than BMs with less demand. This provides support for some degree of fairness since BMs with high demand for resources can make reservations requests at a higher rate and for larger amounts of resources than other BMs with less demand. Remaining and returned resources will then be distributed accounting for different needs.

Thus, each arrangement according to the present invention is associated with one BM and is preferably located in the BM preferably implemented in a computer such a PC, e.g. by using software means.

Thus, the method of the present invention, wherein the resource managing capable entity is exemplified by a BM, comprises the steps of:
401. Limit the rate of reservations request messages received form a first entity sent to the BM.
402. Limit the rate of resource return messages to/from the BM.
403. Adjust the message rate between the reservation request signalling peak rate and sustained rates defined for the communication between the BM and a second entity.

The method of the present invention may preferably be implemented by a computer program product. Thus the present invention relates to a computer program product directly loadable into a processing means in a data network, comprising the software code means for performing the steps of said method.

The present invention also relates to a computer program product stored on a computer usable medium, comprising readable program for causing a processing means in a data network, to control the execution of the steps of said method.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. An arrangement of resource managing capable entities, the arrangement comprising at least one top-level resource managing capable entity (102a) and at least one sub-network resource managing capable entity (104a), the arrangement being adapted to reserve and return network resources requested from a first entity (100a) in a data network and for limiting the rate of messages in the communication between the top-level resource managing capable entity (102a) and the sub-network resource managing capable entity (104a), **characterised in that** said arrangement comprises
- a first message rate limiter means (301) adapted to limit the rate of reservation request messages to the sub-network resource managing capable entity (104a),
- a second message rate limiter means (302) adapted to limit the rate of resource return messages to the sub-network resource managing capable entity (104a), and
- at least one message rate estimator means (303) adapted to adjust the first and second message rate limiter means (301, 302) between signalling peak rates and sustained rates defined for the communication between the top-level resource managing capable entity (102a) and the sub-network resource managing capable entity (104a).

2. The arrangement according claim 1, **characterised in that** it comprises buffering means (304) adapted to queue said reservation request messages and said resource return messages.

3. The arrangement according to claim 1 or 2, **characterised in that** it comprises aggregation means adapted to aggregate the reservation requests.

4. The arrangement according to any of claims 1-3, **characterised in that** the message rate estimator means (303) is a token bucket.

5. The arrangement according to any of claims 1-3, **characterised in that** the message rate estimator means (303) is a moving average.

6. The arrangement according to any of claims 1-3, **characterised in that** the message rate estimator means (303) is a table adapted to store history of transmission intervals.

7. A method in a data network comprising at least one top-level resource managing capable entity (102a), adapted to reserve and return, from at least one sub-network resource managing capable entity (104a), network resources requested from a first entity (100a), for limiting the rate of messages in the communication between the top-level resource managing capable entity (102a) and the sub-network resource managing capable entity (104a),
**characterised in that** the method comprises the steps of:
- limiting the rate of reservation request messages to the sub-network resource managing capable entity (104a),
- limiting the rate of resource return messages to the sub-network resource managing capable entity (104a), and
- adjusting the message rate between signalling peak rates and sustained rates defined for the communication between the top-level resource managing capable entity (104a) and the sub-network resource managing capable entity (104a).

8. The method according to claim 7, **characterised in that** it comprises the step of:
- queuing said reservation request messages and said resource return messages.

9. The method according to any of the previous claims 7-8, **characterised in that** it comprises the step of:
- aggregating the reservation requests.

10. The method according to any of claims 7-9, **characterised in that** the message rate is estimated by means of a token bucket.

11. The method according to any of claims 7-9, **characterised in that** the message rate is estimated by means of a moving average.

12. The method according to any of claims 7-9, **characterised in that** the message rate is estimated by means of a table adapted to store history of transmission intervals.

13. A computer program product stored on a computer usable medium, comprising readable program for causing a processing means in a data network, to control the execution of the steps of any of the claims 7-12.

## Patentansprüche

1. Anordnung von zur Ressourcenverwaltung fähigen Einheiten, wobei die Anordnung mindestens eine zur Ressourcenverwaltung auf oberster Ebene fähige Einheit (102a) und mindestens eine zur Subnetzressourcenverwaltung fähige Einheit (104a) umfasst, wobei die Anordnung dazu angepasst ist, Netzressourcen, die von einer ersten Einheit (100a) in einem Datennetz angefordert werden, zu reservieren und rückzumelden, und um die Rate an Nachrichten in der Kommunikation zwischen der zur Ressourcenverwaltung auf oberster Ebene fähigen Einheit (102) und der zur Subnetzressourcenverwaltung fähigen Einheit (104a) einzuschränken, **dadurch gekennzeichnet, dass** die Anordnung umfasst:
- ein erstes Nachrichtenrateneinschränkungsmittel (301), das dazu angepasst ist, die Rate an Reservierungsanforderungsnachrichten an die zur Subnetzressourcenverwaltung fähige Einheit (104a) einzuschränken,
- ein zweites Nachrichtenrateneinschränkungsmittel (302), das dazu angepasst ist, die Rate an Ressourcenrückmeldungsnachrichten an die zur Subnetzressourcenverwaltung fähige Einheit (104a) einzuschränken, und
- mindestens ein Nachrichtenratenschätzmittel (303), das dazu angepasst ist, das erste und zweite Nachrichtenrateneinschränkungsmittel (301, 302) zwischen Signalgebungsspitzenraten und anhaltenden Raten einzustellen, die für die Kommunikation zwischen der zur Ressourcenverwaltung auf oberster Ebene fähigen Einheit (102) und der zur Subnetzressourcenverwaltung fähigen Einheit (104a) definiert sind.

2. Anordnung nach Anspruch 1, **dadurch gekennzeichnet, dass** sie ein Zwischenspeichermittel (304) umfasst, das dazu angepasst ist, die Reservierungsanforderungsnachrichten und die Ressourcenrückmeldungsnachrichten in eine Warteschlange zu stellen.

3. Anordnung nach Anspruch 1 oder 2, **dadurch gekennzeichnet, dass** sie ein Aggregierungsmittel umfasst, das dazu angepasst ist, die Reservierungsanforderungen zu aggregieren.

4. Anordnung nach einem der Ansprüche 1 bis 3, **dadurch gekennzeichnet, dass** es sich bei dem Nachrichtenratenschätzmittel (303) um eine Zeichenmenge handelt.

5. Anordnung nach einem der Ansprüche 1 bis 3, **dadurch gekennzeichnet, dass** es sich bei dem Nachrichtenratenschätzmittelg (303) um einen gleitenden Mittelwert handelt.

6. Anordnung nach einem der Ansprüche 1 bis 3, **dadurch gekennzeichnet, dass** es sich bei dem Nachrichtenratenschätzmittel (303) um eine Tabelle handelt, die dazu angepasst ist, Übertragungsintervallereignisse zu speichern.

7. Verfahren in einem Datennetz, das mindestens eine zur Ressourcenverwaltung auf oberster Ebene fähige Einheit (102a) umfasst, die dazu angepasst ist, von einer ersten Einheit (100a) angeforderte Netzressourcen aus mindestens einer zur Subnetzressourcenverwaltung fähigen Einheit (104a) zu reservieren und rückzumelden, um die Rate an Nachrichten in der Kommunikation zwischen der zur Ressourcenverwaltung auf oberster Ebene fähigen Einheit (102) und der zur Subnetzressourcenverwaltung fähigen Einheit (104a) einzuschränken,
**dadurch gekennzeichnet, dass** das Verfahren die folgenden Schritte umfasst:
- Einschränken der Rate an Reservierungsanforderungsnachrichten an die zur Subnetzressourcenverwaltung fähigen Einheit (104a),
- Einschränken der Rate an Ressourcenrückmeldungsnachrichten an die zur Subnetzressourcenverwaltung fähigen Einheit (104a), und
- Einstellen der Nachrichtenrate zwischen Signalgebungsspitzenraten und anhaltenden Raten, die für die Kommunikation zwischen der zur Ressourcenverwaltung auf oberster Ebene fähigen Einheit (102a) und der zur Subnetzressourcenverwaltung fähigen Einheit (104a) definiert sind.

8. Verfahren nach Anspruch 7, **dadurch gekennzeichnet, dass** es den folgenden Schritt umfasst:
- Einstellen der Reservierungsanforderungsnachrichten und der Ressourcenrückmeldungsnachrichten in eine Warteschlange.

9. Verfahren nach einem der vorstehenden Ansprüche 7 bis 8, **dadurch gekennzeichnet, dass** es den folgenden Schritt umfasst:
- Aggregieren der Reservierungsanforderungen.

10. Verfahren nach einem der Ansprüche 7 bis 9, **dadurch gekennzeichnet, dass** die Nachrichtenrate mittels eines Zeichenmenge geschätzt wird.

11. Verfahren nach einem der Ansprüche 7 bis 9, **dadurch gekennzeichnet, dass** die Nachrichtenrate mittels eines gleitenden Mittelwerts geschätzt wird.

12. Verfahren nach einem der Ansprüche 7 bis 9, **dadurch gekennzeichnet, dass** die Nachrichtenrate mittels einer Tabelle geschätzt wird, die dazu angepasst ist, Übertragungsintervallereignisse zu speichern.

13. Computerprogrammprodukt, das auf einem computernutzbaren Datenträger gespeichert ist, ein lesbares Programm umfassend, um eine Verarbeitungseinrichtung in einem Datennetz dazu zu veranlassen, die Ausführung der Schritte nach einem der Ansprüche 7 - 12 zu steuern.

## Revendications

1. Montage d'entités capables de gérer des ressources, le montage comprenant au moins une entité capable de gérer des ressources de niveau supérieur (102a) et au moins une entité capable de gérer des ressources de sous-réseau (104a), le montage étant apte à réserver et renvoyer des ressources de réseau demandées depuis une première entité (100a) dans un réseau de données et étant destiné à limiter le débit de messages dans la communication entre l'entité capable de gérer des ressources de niveau supérieur (102a) et l'entité capable de gérer des ressources de sous-réseau (104a), **caractérisé en ce que** ledit montage comprend
- un premier moyen limiteur de débit de messages (301) apte à limiter le débit de messages de demande de réservation vers l'entité capable de gérer des ressources de sous-réseau (104a),
- un deuxième moyen limiteur de débit de messages (302) apte à limiter le débit de messages de renvoi de ressources vers l'entité capable de gérer des ressources de sous-réseau (104a), et
- au moins un moyen estimateur de débit de messages (303) apte à ajuster le premier et le deuxième moyen limiteur de débit de messages (301, 302) entre des débits de pointe de signalisation et des débits soutenus définis pour la communication entre l'entité capable de gérer des ressources de niveau supérieur (102a) et l'entité capable de gérer des ressources de sous-réseau (104a).

2. Le montage selon la revendication 1, **caractérisé en ce qu'**il comprend des moyens de mise en tampon (304) aptes à mettre en file d'attente lesdits messages de demande de réservation et lesdits messages de renvoi de ressources.

3. Le montage selon la revendication 1 ou 2, **caractérisé en ce qu'**il comprend des moyens d'agrégation aptes à agréger les demandes de réservation.

4. Le montage selon l'une quelconque des revendications 1 à 3, **caractérisé en ce que** le moyen estimateur de débit de messages (303) est un jeu de caractères.

5. Le montage selon l'une quelconque des revendications 1 à 3, **caractérisé en ce que** le moyen estimateur de débit de messages (303) est une moyenne mobile.

6. Le montage selon l'une quelconque des revendications 1 à 3, **caractérisé en ce que** le moyen estimateur de débit de messages (303) est un tableau apte à stocker un historique d'intervalles de transmission.

7. Procédé dans un réseau de données comprenant au moins une entité capable de gérer des ressources de niveau supérieur (102a), apte à réserver et renvoyer, depuis au moins une entité capable de gérer des ressources de sous-réseau (104a), des ressources de réseau demandées depuis une première entité (100a), afin de limiter le débit de messages dans la communication entre l'entité capable de gérer des ressources de niveau supérieur (102a) et l'entité capable de gérer des ressources de sous-réseau (104a),
**caractérisé en ce que** le procédé comprend les étapes consistant à :
- limiter le débit de messages de demande de réservation vers l'entité capable de gérer des ressources de sous-réseau (104a),
- limiter le débit de messages de renvoi de ressources vers l'entité capable de gérer des ressources de sous-réseau (104a), et
- ajuster le débit de messages entre des débits de pointe de signalisation et des débits soutenus définis pour la communication entre l'entité capable de gérer des ressources de niveau supérieur (102a) et l'entité capable de gérer des ressources de sous-réseau (104a).

8. Le procédé selon la revendication 7, **caractérisé en ce qu'**il comprend l'étape consistant à :
- mettre en file d'attente lesdits messages de demande de réservation et lesdits messages de renvoi de ressources.

9. Le procédé selon l'une quelconque des revendications précédentes 7 à 8, **caractérisé en ce qu'**il comprend l'étape consistant à :
- agréger les demandes de réservation.

10. Le procédé selon l'une quelconque des revendications 7 à 9, **caractérisé en ce que** le débit de messages est estimé au moyen d'un seau à jeton.

11. Le procédé selon l'une quelconque des revendications 7 à 9, **caractérisé en ce que** le débit de messages est estimé au moyen d'une moyenne mobile.

12. Le procédé selon l'une quelconque des revendications 7 à 9, **caractérisé en ce que** le débit de messages est estimé au moyen d'un tableau apte à stocker un historique d'intervalles de transmission.

13. Produit de programme informatique stocké sur un support utilisable sur ordinateur, comprenant un programme lisible destiné à faire en sorte qu'un moyen de traitement, dans un réseau de données, commande l'exécution des étapes de l'une quelconque des revendications 7 à 12.
